# EUROPEAN PATENT APPLICATION

(11) **EP 4 198 360 A1**
(43) Date of publication of application: **21.06.2023**
(21) Application number: 22211232.8
(22) Date of filing: 02.12.2022
(51) Int. Cl.: F16K 31/06, F16K 11/056, F16K 11/044

(54) **FOUR-WAY SOLENOID**

(30) Priority: 15.12.2021 US 202117552298
(71) Applicant: Hamilton Sundstrand Corporation, Charlotte, NC 28217-4578 (US)
(72) Inventor: RUTAR, Matej, Manchester, CT (US)
(74) Representative: Dehns

(57) **Abstract**

In accordance with at least one aspect of this disclosure, a system, e.g. a four-way valve system, can include a fluid source to provide fluid to a moveable component to move the moveable component between a first position and a second position. The system can include a four-way valve (108) configured to selectively allow flow from the fluid source to enter either a first side of the moveable component through a first high pressure fluid channel (112) or a second side of the moveable component through a second high pressure fluid channel (122). A controller can be operatively connected to control the valve to move between a first position and a second position, which in turn adjusts the position of the moveable component between the first position and the second position.

## Description

### TECHNICAL FIELD

This disclosure relates generally to valve systems, and in particular to solenoid valve systems.

### BACKGROUND

Solenoids can be used as a simple on/off mechanism for an actuated device (e.g., butterfly valve). Typical solenoids can either provide high pressure or vent only one side of an actuator, and the rate of actuator movement can be controlled by either the solenoid flow area or other rate limiting restrictions. Therefore, leakages across the actuator, other system leakages, or leakages in the solenoid, may become large compared to solenoid flow area or rate limiting restrictions. Such leakages can lead to loss of force margin in the actuator, and in turn place the actuated device being in the wrong position.

There is always a need in the art for improvements to valves for actuated devices. This disclosure provides a solution for this need.

### SUMMARY

In accordance with at least one aspect of this disclose, a four-way valve includes, a valve body, configured to translate between a first position and a second position. In embodiments, the valve body includes, a pin bounded by sealing members on opposing ends of the pin, the sealing members configured to seat within a respective juncture between one or more fluid channels, and a solenoid armature disposed on the pin between the sealing members and configured to move within a valve chamber. A biasing member is configured to bias the valve body to the second position and a solenoid operatively connected to the armature to control positioning of the valve body among the first and second positions based on an energized state of the solenoid.

In embodiments, the sealing members can include a first sealing member disposed in a first end of the pin and a second sealing member disposed on a second end of the pin. In the first position, the solenoid is energized to move the armature against the biasing member, positioning the valve body such that the first sealing member is configured to seal against an inner portion of a first juncture proximate the first side of the pin, and the second sealing member is configured to seal against an outer portion of a second juncture proximate the second side of the pin.

In the second position, the solenoid is de-energized to positioning the armature with the biasing member such that the first sealing member is configured to seal against an outer portion of a first juncture proximate the first side of the pin, and the second sealing member is configured to seal against an inner portion of a second juncture proximate the second side of the pin.

In embodiments, the respective juncture can be shaped to match a profile of the sealing members, and the sealing members can include ball stops. In embodiments, the ball stops and respective juncture can be designed, tuned, and configured to provide low dimensional sealing. In certain embodiments, the valve body can include metal, and in certain embodiments, the valve body can be constructed entirely from metal. In embodiments, the valve body can be configured to withstand temperatures of greater than 1000F. In embodiments, the four-way valve does not include a spool valve.

In accordance with at least one aspect of this disclosure, a valve system can include, a moveable component configured to move between a first position and a second position, a first high pressure fluid channel fluidly connecting a fluid source to a first side of the moveable component, a second high pressure fluid channel fluidly connecting the fluid source to a second side of the moveable component, a first low pressure fluid channel fluidly connecting the first side of the moveable component to the fluid source, a second low pressure fluid channel fluidly connecting the second side of the moveable component to the fluid source, a four-way valve, configured to selectively allow flow from the fluid source to enter either the first side of the moveable component through the first high pressure fluid channel or the second side of the moveable component through the second high pressure fluid channel, and a controller operatively connected to control to move the four-way valve between a first position and a second position to adjust a position of the moveable component.

In embodiments, the four-way valve can include a valve body, as described. In embodiments, the valve body can include a pin bounded by sealing members on opposing ends of the pin, the sealing members configured to seat within a first juncture between the first high pressure fluid channel and the first low pressure fluid channel and a second juncture between the second high pressure fluid channel and the second low pressure fluid channel, and a solenoid armature disposed on the pin between the sealing members.

In embodiments, the four-way valve can be as described. In embodiments, the four-way valve can include a biasing member configured to bias the valve body to the second position, and a solenoid operatively connected to the armature to control positioning of the valve body among the first and second positions based on an energized state of the solenoid.

In embodiments, when the solenoid is energized, the valve is in the first position so that flow from the fluid source enters the first side of the moveable component through the first high pressure fluid channel and flow from the second side of the moveable component exits to the fluid source through the second low pressure fluid channel. In embodiments, when the solenoid is de-energized, the valve is in the second position so that flow from the fluid source enters the second side of the moveable component through the second high pressure fluid channel and flow from the first side of the moveable component exits to the fluid source through the first low pressure fluid channel. In certain embodiments, the four-way valve can include metal, and one or more sealing members can include a ball stop seal.

In accordance with at least one aspect of this disclosure, a valve system can include a four-way valve disposed in a fluid channel, configured to selectively allow flow from a fluid channel to a first side of a moveable component and from a second side of a moveable component, or from the fluid channel to the second side of the moveable component and from the first side of the moveable component based on a state of the four-way valve. The valve system can further include a controller configured to control the state of the four-way valve.

In embodiments, in the first state, a first end of the valve can be sealed against an inner portion of a first juncture proximate the first side of the moveable component, and a second end of the valve can be sealed against an outer portion of a second juncture proximate the second side of the moveable component to allow flow from the fluid channel to enter the first side of the moveable component, to allow flow to exit from the second side of the moveable component, to block flow from exiting the first side of the moveable component, and to block flow from entering the second side of the moveable component.

In embodiments, in the second state, a first end of the valve can be sealed against an outer portion of a first juncture proximate the first side of the moveable component, and a second end of the valve can be sealed against an inner portion of a second juncture proximate the second side of the moveable component, to allow flow from the fluid channel to enter the second side of the moveable component, to allow flow to exit from the first side of the moveable component, to block flow from entering the first side of the moveable component, and to block flow from exiting the second side of the moveable component.

These and other features of the embodiments of the subject disclosure will become more readily apparent to those skilled in the art from the following detailed description taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, embodiments thereof will be described in detail herein below with reference to certain figures, wherein:
Fig. 1 is a schematic cross sectional view of a valve system in accordance with this disclosure, showing a valve and actuator in a first position; and
Fig. 2 is a schematic cross sectional view of the valve system of Fig. 1, showing a valve and actuator in a second position.

### DETAILED DESCRIPTION

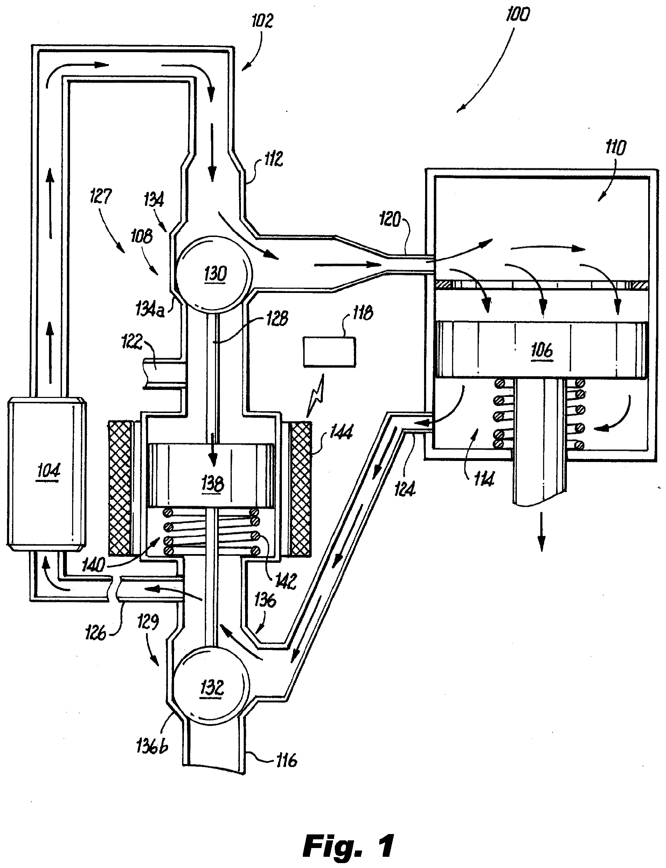

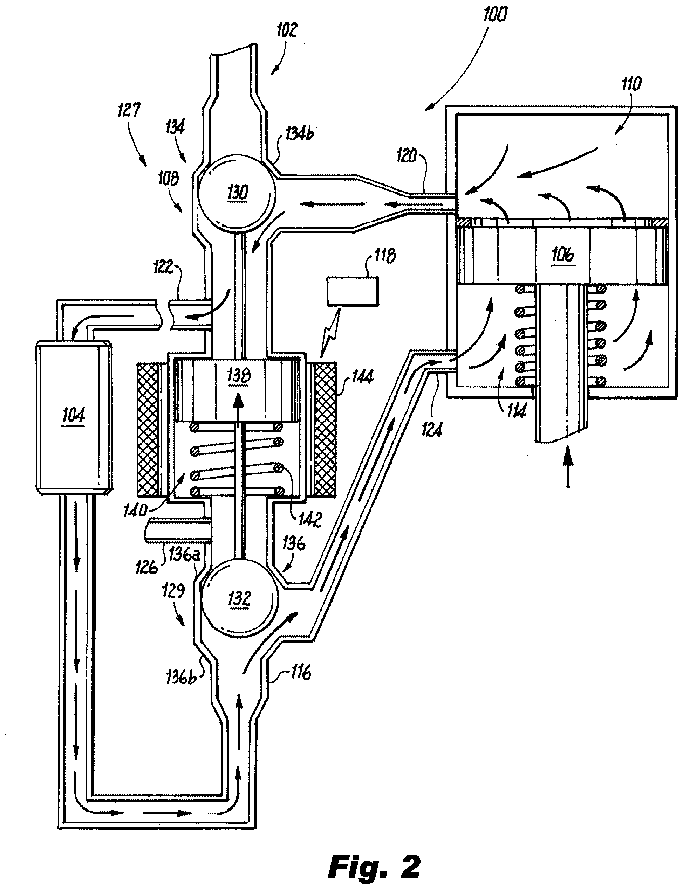

Reference will now be made to the drawings wherein like reference numerals identify similar structural features or aspects of the subject disclosure. For purposes of explanation and illustration, and not limitation, an illustrative view of an embodiment of a system in accordance with the disclosure is shown in Fig. 1 and is designated generally by reference character 100. Other embodiments and/or aspects of this disclosure are shown in Fig. 2.

In accordance with at least one aspect of this disclosure, a system 100, e.g. a four-way valve system 102, can include a fluid source 104 to provide fluid to a moveable component 106 (e.g., an actuator as shown) to move the moveable component 106 between a first position and a second position. The system 100 can include a four-way valve 108 configured to selectively allow flow from the fluid source 104 to enter either a first side 110 (e.g., a top side as shown) of the moveable component 106 through a first high pressure fluid channel 112 or a second side 114 (e.g., a bottom side as shown) of the moveable component 106 through a second high pressure fluid channel 116. A controller 118 can be operatively connected to control the valve 108 to move between a first position and a second position, which in turn adjusts the position of the moveable component 106 between the first position and the second position. The valve 108 and moveable component 106 can move in the same direction, so that when the valve 108 is in the first position (e.g., downward as shown), the moveable component can also be in the first position (e.g., downward as shown).

The first side 110 of the moveable component 106 can include a fluid port 120, where, in the first position, the first high pressure fluid channel 112 can fluidly connect the fluid source 104 to the first side 110 of the moveable component 106 via the fluid port 120 (e.g., acting as a fluid inlet), and in the second position, a first low pressure fluid channel 122 can fluidly connect the first side 110 of the moveable component 106 back to the fluid source 104 via the fluid port 120 (e.g., acting as a fluid outlet). Similarly, the second side 114 of the moveable component 106 can include a fluid port 124, where, in the second position, the second high pressure fluid channel 116 can fluidly connect the fluid source 104 to the second side 114 of the moveable component 106 via the fluid port 124 (e.g., acting as a fluid inlet), and in the first positon, a second low pressure fluid channel 126 can fluidly connect the second side 114 of the moveable component 106 back to the fluid source 104 via the fluid port 124.

The four-way valve 108 can include a valve body, having a pin 128 bounded by sealing members 130, 132 on opposing ends of the pin 128. A first sealing member 130 can be configured to seat within a first juncture 134 between the first high pressure fluid channel 112 and the first low pressure fluid channel 122, and a second sealing member 132 can be configured to seat within a second juncture 136 between the second high pressure fluid channel 116 and the second low pressure fluid channel 126. In embodiments, the four-way valve 108 can include a solenoid valve, and the valve body can also include a solenoid armature 138 disposed on the pin 128 between the sealing members 130, 132, and housed within a valve chamber 140. It is also contemplated, in certain embodiments, the sealing members 130, 132 can be included on separate pins 128, each separately included on opposing sides of the armature 138.

A biasing member 142 can be included within the valve chamber 140 to bias the valve body via the armature 138 towards the second position (e.g., as shown in Fig. 2). A solenoid 144, and respective controller 118, can be operatively connected to the armature 138 to control positioning of the valve body among the first and second positions based on an energized state of the solenoid 144.

When the solenoid 144 is energized, the valve 108 is in the first position, where the solenoid 144 pulls the armature 138 against the force of the biasing member 142, so that flow from the fluid source 104 enters the first side 110 of the moveable component 106 through the first high pressure fluid channel 112 and port 120, applying a pressure to the first side 110 of the moveable component 106 and forcing flow from the second side 114 of the moveable component 106 to exit back to the fluid source 104 through the first low pressure fluid channel via port 124. In this position, such as shown in Fig. 1 for example, the first sealing member 130 is sealed against an inner portion 134a of the first juncture 134, proximate a first side 127 of the pin 128 and the first side 110 of the moveable component 106, allowing flow to enter the first side 110 through the first high pressure fluid channel 112, but blocking flow from exiting the first side 110 through the first low pressure fluid channel 122. Also in the first position, the second sealing member 132 is sealed against an outer portion 136b of the second juncture 136, proximate a second side 129 of the pin 128 and the second side 114 of the moveable component 106, allowing flow to exit the second side 114 through the second low pressure fluid channel 126, but blocking flow from entering the second side 114 through the second high pressure fluid channel 116.

When the solenoid is de-energized, the valve 108 is in the second position, where the solenoid 144 allows the armature 138 to move with the force of the biasing member 142, so that flow from the fluid source 104 enters the second side 114 of the moveable component 106 through the second high pressure fluid channel 116, applying a pressure to the second side 114 of the moveable component 106 and forcing flow from the first side 110 of the moveable component 106 to exit back to the fluid source 104 through the first low pressure fluid channel 122. In this position, such as shown in Fig. 2 for example, the first sealing member 130 is sealed against an outer portion 134b of the first juncture 134, and the second sealing member 132 is sealed against an inner portion 136a of the second juncture 136. In this position, the valve 108 allows flow to enter the second side 114 of the moveable component 106 through the second high pressure fluid channel 116, but blocks flow from exiting the second side 114 through the second low pressure fluid channel 126. Also in the second position, the valve 108 is positioned to allow flow to exit the first side 110 of the moveable component 106 through the first low pressure fluid channel 122, but block flow from entering the first side 110 through the first high pressure fluid channel 112.

In embodiments, the first and second junctures 134, 136 can be shaped to match a profile of the sealing members 130, 132. For example, as shown, the first and second sealing members 130, 132 can be ball stop seals, and the junctures 134, 136 may form a complimentary shape to the ball stop to provide low dimensional sealing. In embodiments, the valve body 108 can include metal, and in certain embodiments, the entire valve body 108 can be constructed entirely from metal or metallic material(s). In embodiments, the valve body 108 can withstand temperatures over 1000F, such as those in aircraft engines or other high temperature applications. The valve system 102 as shown and described can include any suitable shape, size, or component to provide the desired four-way porting, however, it is contemplated that embodiments of the valve body 108 and/or valve system 102 does not include a spool valve, unlike in typical systems which include spool valves having elastomer o-rings seals (e.g., rubber or plastic) with a maximum temperature range of about 500F.

In accordance with at least one aspect of this disclosure, a valve system (e.g., valve system 102) can include a four-way valve (e.g., a four-way double pin solenoid as described herein as valve 108) disposed in a fluid channel, configured to selectively allow flow from the fluid channel to a first location (e.g., a top side of an actuator) and from a second location (e.g., a bottom side of the actuator) to the fluid channel, or from the fluid channel to the second location and from the first location to the fluid channel based on a state of the four-way valve, where the state of the valve is controlled by a controller (e.g., controller 118).

Traditional solenoids only change pressure to one side of an actuator, while embodiments allow for switching of pressures to both sides of the actuator with a single device. In embodiments, the solenoid can include ball capped push-pins that are on opposing sides of an armature, allowing sealing on one end of the pin, while permitting flow on the opposed end of the pin. The sealing states can then be switched, allowing for four-way porting. In embodiments, a complete seal is possible even with small dimensional gaps between the pin and ball cap as one side will be pressure loaded closed for each solenoid state. The four-way porting can provide high pressure to either side of an actuator, which can produce greater force margins and/or permit usage of smaller actuators. Embodiments provide a system that can be more tolerant of leakages, while also minimizing leakages. For example, embodiments can have better sealing capability then other four-way porting methods, such as non-metal valves, or spool valves.

Embodiments can supply high pressure fluid to either side of the actuator while venting the opposite side at the same time, which can provide higher power actuation without requiring additional valves. Instead of utilizing a spool valve to port the pressure, for example, embodiments can utilize a unique two push pin design to change porting between valve states. Embodiments can include an all metal construction, allowing for higher temperature operation. Embodiments can also provide high dimensional variability possible without affecting sealing performance. While the moveable component is shown and described as including an actuator, it is contemplated that the moveable component can be any suitable moveable component moved by a solenoid (e.g., pneumatic or hydraulic).

As will be appreciated by those skilled in the art, aspects of the present disclosure may be embodied as a system, method or computer program product. Accordingly, aspects of this disclosure may take the form of an entirely hardware embodiment, an entirely software embodiment (including firmware, resident software, micro-code, etc.), or an embodiment combining software and hardware aspects, all possibilities of which can be referred to herein as a "circuit," "module," or "system." A "circuit," "module," or "system" can include one or more portions of one or more separate physical hardware and/or software components that can together perform the disclosed function of the "circuit," "module," or "system", or a "circuit," "module," or "system" can be a single self-contained unit (e.g., of hardware and/or software). Furthermore, aspects of this disclosure may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber cable, RF, etc., or any suitable combination of the foregoing.

Computer program code for carrying out operations for aspects of this disclosure may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of this disclosure may be described above with reference to flowchart illustrations and/or block diagrams of methods, apparatus (systems) and computer program products according to embodiments of this disclosure. It will be understood that each block of any flowchart illustrations and/or block diagrams, and combinations of blocks in any flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in any flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified herein.

Those having ordinary skill in the art understand that any numerical values disclosed herein can be exact values or can be values within a range. Further, any terms of approximation (e.g., "about", "approximately", "around") used in this disclosure can mean the stated value within a range. For example, in certain embodiments, the range can be within (plus or minus) 20%, or within 10%, or within 5%, or within 2%, or within any other suitable percentage or number as appreciated by those having ordinary skill in the art (e.g., for known tolerance limits or error ranges).

The articles "a", "an", and "the" as used herein and in the appended claims are used herein to refer to one or to more than one (i.e., to at least one) of the grammatical object of the article unless the context clearly indicates otherwise. By way of example, "an element" means one element or more than one element.

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of" or "exactly one of," or, when used in the claims, "consisting of," will refer to the inclusion of exactly one element of a number or list of elements. In general, the term "or" as used herein shall only be interpreted as indicating exclusive alternatives (i.e., "one or the other but not both") when preceded by terms of exclusivity, such as "either," "one of," "only one of," or "exactly one of "

Any suitable combination(s) of any disclosed embodiments and/or any suitable portion(s) thereof are contemplated herein as appreciated by those having ordinary skill in the art in view of this disclosure.

The embodiments of the present disclosure, as described above and shown in the drawings, provide for improvement in the art to which they pertain. While the apparatus and methods of the subject disclosure have been shown and described, those skilled in the art will readily appreciate that changes and/or modifications may be made thereto without departing from the scope of the subject disclosure.

## Claims

1. A four-way valve (108), comprising:
a valve body, configured to translate between a first position and a second position, including:
a pin (128) bounded by sealing members (130, 132) on opposing ends of the pin (128), the sealing members configured to seat within a respective juncture (134, 136) between one or more fluid channels (112, 122, 116, 126); and
a solenoid armature (138) disposed on the pin between the sealing members (130, 132) and configured to move within a valve chamber (140);
a biasing member (142) configured to bias the valve body to the second position; and
a solenoid (144) operatively connected to the armature to control positioning of the valve body among the first and second positions based on an energized state of the solenoid.

2. The valve as recited in claim 1, wherein the sealing members include a first sealing member (130) disposed in a first end of the pin and a second sealing member (132) disposed on a second end of the pin.

3. The valve as recited in claim 2, wherein in the first position, the solenoid (144) is energized to move the armature against the biasing member (142), positioning the valve body such that the first sealing member (130) is configured to seal against an inner portion of a first juncture (134) proximate the first side of the pin, and the second sealing member (132) is configured to seal against an outer portion of a second juncture (136) proximate the second side of the pin.

4. The valve as recited in claim 2 or 3, wherein in the second position, the solenoid (144) is de-energized to positioning the armature with the biasing member (142) such that the first sealing member (130) is configured to seal against an outer portion of a first juncture (134) proximate the first side of the pin, and the second sealing member (132) is configured to seal against an inner portion of a second juncture (136) proximate the second side of the pin.

5. The valve as recited in any preceding claim, wherein the respective juncture (134, 136) is shaped to match a profile of the sealing members (130, 132).

6. The valve as recited in claim 5, wherein the sealing members include ball stops, and preferably wherein the ball stops and respective juncture (134, 136) are configured to provide low dimensional sealing.

7. The valve as recited in any preceding claim, wherein the valve body includes metal.

8. The valve as recited in claim 7, wherein the valve body is constructed entirely from metal; and/or wherein the valve body is configured to withstand temperatures of greater than 1000F.

9. A valve system, comprising:
a moveable component configured to move between a first position and a second position;
a first high pressure fluid channel (112) fluidly connecting a fluid source to a first side of the moveable component;
a second high pressure fluid channel (116) fluidly connecting the fluid source to a second side of the moveable component;
a first low pressure fluid channel (122) fluidly connecting the first side of the moveable component to the fluid source;
a second low pressure fluid channel (126) fluidly connecting the second side of the moveable component to the fluid source;
a four-way valve (108), configured to selectively allow flow from the fluid source to enter either the first side of the moveable component through the first high pressure fluid channel or the second side of the moveable component through the second high pressure fluid channel; and
a controller operatively connected to control to move the four-way valve between a first position and a second position to adjust a position of the moveable component.

10. The system as recited in claim 9, wherein the four-way valve includes:
a valve body, including:
a pin (128) bounded by sealing members (130, 132) on opposing ends of the pin, the sealing members configured to seat within a first juncture (134) between the first high pressure fluid channel (112) and the first low pressure fluid channel (122) and a second juncture (136) between the second high pressure fluid channel (116) and the second low pressure fluid channel (126); and
a solenoid armature (138) disposed on the pin between the sealing members;
a biasing member (142) configured to bias the valve body to the second position; and
a solenoid (144)operatively connected to the armature to control positioning of the valve body among the first and second positions based on an energized state of the solenoid.

11. The system as recited in claim 10, wherein when the solenoid (144) is energized, the valve is in the first position so that flow from the fluid source enters the first side of the moveable component through the first high pressure fluid channel (112) and flow from the second side of the moveable component exits to the fluid source through the second low pressure fluid channel (126); and/or wherein when the solenoid (144) is de-energized, the valve is in the second position so that flow from the fluid source enters the second side of the moveable component through the second high pressure fluid channel (122) and flow from the first side of the moveable component exits to the fluid source through the first low pressure fluid channel (116).

12. The system as recited in any of claims 9-11, wherein the four-way valve (108) includes metal, and wherein one or more sealing members include a ball stop seal.

13. A valve system, comprising:
a four-way valve (108) disposed in a fluid channel, configured to selectively allow flow from a fluid channel to a first side of a moveable component and from a second side of a moveable component, or from the fluid channel to the second side of the moveable component and from the first side of the moveable component based on a state of the four-way valve; and
a controller configured to control the state of the four-way valve.

14. The system as recited in claim 13, wherein in the first state, a first end of the valve is sealed against an inner portion of a first juncture proximate the first side of the moveable component, and a second end of the valve is sealed against an outer portion of a second juncture proximate the second side of the moveable component to allow flow from the fluid channel to enter the first side of the moveable component, to allow flow to exit from the second side of the moveable component, to block flow from exiting the first side of the moveable component, and to block flow from entering the second side of the moveable component.

15. The valve as recited in claim 13 or 14, wherein in the second state, a first end of the valve is sealed against an outer portion of a first juncture proximate the first side of the moveable component, and a second end of the valve is sealed against an inner portion of a second juncture proximate the second side of the moveable component, to allow flow from the fluid channel to enter the second side of the moveable component, to allow flow to exit from the first side of the moveable component, to block flow from entering the first side of the moveable component, and to block flow from exiting the second side of the moveable component.
